# EUROPÄISCHE PATENTSCHRIFT

(11) **EP 2 774 721 B1**
(45) Veröffentlichungstag und Bekanntmachung des Hinweises auf die Patenterteilung: **04.11.2015**
(21) Anmeldenummer: 13157720.7
(22) Anmeldetag: 05.03.2013
(51) Int. Cl.: B24B 49/18, B24B 53/06

(54) **Verfahren zum Ermitteln von Topografieabweichungen eines Abrichtwerkzeugs in einer Schleifmaschine und entsprechend ausgestattete Schleifmaschine**
Method for determining topographical deviations of a dressing tool in a grinding machine, and grinding machine provided with same
Procédé de détermination d'écarts de topographie d'un outil d'ajustement dans une ponceuse et ponceuse équipée de manière correspondante

(43) Veröffentlichungstag der Anmeldung: 10.09.2014
(73) Patentinhaber: Klingelnberg AG, 8050 Zürich (CH)
(72) Erfinder: Ribbeck, Karl Martin, 42897 Remscheid (DE)
(74) Vertreter: Heusch, Christian

(56) Entgegenhaltungen:
- US-A- 4 359 841
- US-A- 5 175 962

## Beschreibung

### Gebiet der Erfindung

Gegenstand der Erfindung ist ein Verfahren zum Ermitteln von Geometrieabweichungen eines Abrichtwerkzeugs in einer Schleifmaschine, sowie eine Schleifmaschine, die zum Ausführen dieses Verfahrens ausgelegt ist.

### Hintergrund der Erfindung, Stand der Technik

Es gibt zahlreiche maschinelle Bearbeitungsverfahren, bei denen Schleifwerkzeuge eingesetzt werden. Vor allem im Bereich der Zahnradbearbeitung kommen Schleifwerkzeuge zum Einsatz, die abgerichtet werden können. Es gibt zum Beispiel Schleifscheiben, die nahezu tellerförmig sind, und es gibt topfförmige sowie kegelförmige Schleifscheiben. Typischerweise sind diese Schleifwerkzeuge mit einem Abrasivmaterial belegt, das speziell zum Abrichten (im Englischen "dressing" genannt) geeignet ist.

In Schleifmaschinen wird häufig zusätzlich zu dem Schleifwerkzeug ein Abrichtwerkzeug bereitgestellt, das bei Bedarf zum Einsatz kommt, um das Schleifwerkzeug abzurichten. Moderne Schleifmaschinen umfassen typischerweise ein rotationsangetriebenes Abrichtwerkzeug, das automatisch bahngesteuert zur Konturgebung und zum Abrichten des Schleifwerkzeugs eingesetzt wird.

Wenn es z.B. um das schleifende Bearbeiten von Verzahnungen geht, müssen die Arbeitsflächen des Schleifwerkzeugs nach einer gewissen Zeit erneut auf die gewünschte Form gebracht (profiliert) werden, um eine hinreichende Qualität der Verzahnung gewährleisten zu können.

Hierfür ist ein Abrichtvorgang erforderlich, für den ein Profilabrichtverfahren oder ein konturgenerierendes, zeilenweises Abrichtverfahren eingesetzt werden kann. Beim Profilabrichten hat das Abrichtwerkzeug mit den Flanken des Schleifwerkzeugs Linienkontakt, während beim zeilenweisen Abrichten ein punktförmiger Kontakt vorliegt. Durch das Abrichten wird die Formgenauigkeit des Schleifwerkzeugs wieder hergestellt. Ausserdem wird beim Abrichten das Schleifwerkzeug neu geschärft.

Im Nachfolgenden geht es um Schleifmaschinen, deren Abrichtvorgang auf dem Prinzip des Profilabrichtens oder des Formabrichtens mit einer Abrichtrolle oder -scheibe basiert. Bei den entsprechenden rotierenden Profilabrichtrollen oder - scheiben wird die Geometrie der Abrichtrolle bei der Erzeugung der Geometrie/ Kontur der Schleifscheibe berücksichtigt. Die Geometrie der Schleifscheibe findet wiederum bereits bei der Beschreibung der Werkstückgeometrie Berücksichtigung. Diese Abrichtwerkzeuge eignen sich besonders für komplexe Profile in der Massenfertigung. Die rotierenden Formabrichtrollen oder -scheiben erzeugen bzw. korrigieren die Kontur des Schleifwerkzeugs durch ein CNC-bahngesteuertes Abfahren entlang eines steuerungsseitig vorgegebenen Weges. Es können auch Diamant-Formplatten als Abrichtwerkzeug eingesetzt werden, die mittels Lasertechnik genau an die Geometrie des Schleifwerkzeugs angepasst werden können.

Die Form- und Profilabrichtprozesse unterliegen zahlreichen Einflussgrössen, die das Abrichten des Schleifwerkzeugs deutlich beeinflussen können. Beim Form-Abrichten spielen vor allem die Geometrie der Formabrichtrolle oder -scheibe, sowie der Überdeckungsgrad eine grosse Rolle. Bei Profilabrichtrollen oder -scheiben ist die Qualität der Belegung für das Abrichtergebnis von besonderer Bedeutung.

Vorzugsweise kommt im Rahmen der Erfindung eine CNCbahngesteuerte Abrichtrolle oder -scheibe als Abrichtwerkzeug zum Einsatz. Das Abrichtwerkzeug kann aber auch, wie noch beschrieben wird, dreh-antreibbar fest an dem Maschinenbett oder einer anderen feststehenden oder verfahrbaren Komponente der Maschine befestigt sein. Die für das Abrichten erforderliche Bahnsteuerung erfolgt in diesem Spezialfall dann über CNC-gesteuerte Bewegungen der Achsen, die das Schleifwerkzeug relativ zum Abrichtwerkzeug bewegen, während das Abrichtwerkzeug sich lediglich um die Abrichtachse dreht.

Voraussetzung zum Abrichten mit Abrichtwerkzeugen ist, dass zwischen Abrichtwerkzeug und Schleifwerkzeug eine relative Abricht(schleif)bewegung stattfinden kann. Das Abrichtwerkzeug kann sich in der gleichen oder in die entgegengesetzte Richtung drehen wie das abzurichtende Schleifwerkzeug. Das Geschwindigkeitsverhältnis zwischen Schleifwerkzeug und Abrichtwerkzeug ist bei rotierenden Abrichtwerkzeugen eine weitere Größe, die das Abrichtergebnis beeinflusst.

Beim Arbeiten mit Profilabrichtrollen oder -scheiben ist die Relativbewegung gleich der Differenz der Umfangsgeschwindigkeiten von Abrichtwerkzeug und Schleifwerkzeug. Zum Erzeugen der Relativgeschwindigkeit in Umfangsrichtung sollten Abrichtwerkzeuge mit einem eigenen Rotationsantrieb ausgerüstet sein.

Beim Profilabrichten spielen auch die Profilgenauigkeit, der Rundlauf und der Planlauf des Schleifwerkzeugs eine grosse Rolle.

Auf neueren Schleifmaschinen kommen, wegen der besseren Reproduzierbarkeit der Abrichtergebnisse, fast ausschließlich Formrollen als Abrichtwerkzeuge zum Einsatz. Diese sind gekennzeichnet durch eine Wirkbreite, die kleiner ist als die Schleifscheibenbreite. Das zu erzeugende Profil wird zumeist per Bahnsteuerung erzeugt. Diese Formrollen sind sehr flexibel einsetzbar.

Bei der spanenden Herstellung von Spiralkegelrädern, unterscheidet man zwischen dem Einzelteilverfahren und dem kontinuierlichen Verfahren, das teilweise auch als kontinuierliches Teilungsverfahren bezeichnet wird. Das Einzelteilverfahren ist ein diskontinuierliches Verfahren.

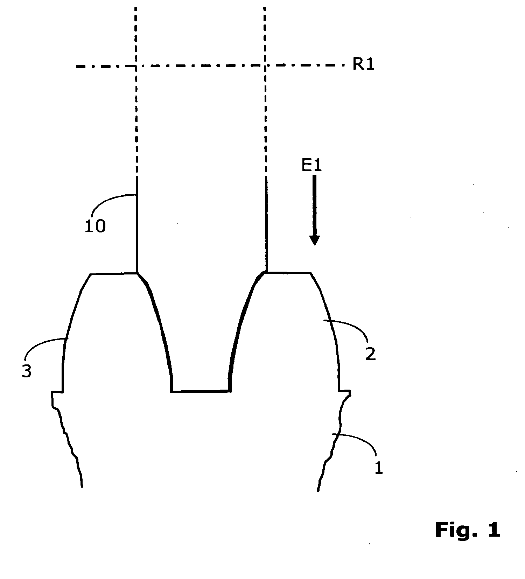

Fig. 1 zeigt eine schematische Seitenansicht eines Abschnitts einer Profil-Schleifscheibe 10 und eines Werkstücks 1 (hier ein Stirnrad). Die Profil-Schleifscheibe 10 rotiert um die Schleifwerkzeug-Rotationsachse R1 (hier kurz Werkzeug-Rotationsachse genannt) und das Werkstück 1 um die Werkstückachse R2. Die Werkstückachse R2 ist nicht in Fig. 1 gezeigt. Sie steht hier senkrecht auf der Zeichenebene. Mit einer Eintauchbewegung E1 wird die Profil-Schleifscheibe 10 in eine Zahnlücke zugestellt, die von zwei Zähnen 2, 3 begrenzt wird. Nach dem Bearbeiten der Zahnlücke wird die Profil-Schleifscheibe 10 zurück gezogen und das Werkstück 1 führt eine Teilungsdrehung durch. Dann taucht die Profil-Schleifscheibe 10 in eine andere Zahnlücke ein, um so die Zahnflanken einer Zahnlücke nach der anderen zu bearbeiten.

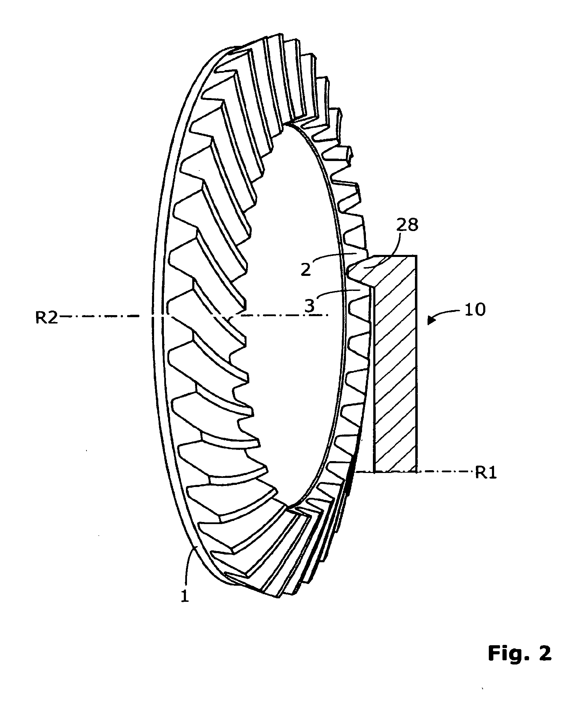

Ein wichtiges Verfahren zur Hartbearbeitung speziell von Kegelrädern ist das Schleifen. Aufgrund der komplexen geometrischen Verhältnisse, wird die Hartbearbeitung im diskontinuierlichen Betrieb "Zahnlücke für Zahnlücke" durchgeführt. Hier kommen meist topfförmige Schleifscheiben zum Einsatz, die abgerichtet werden können. Fig. 2 zeigt in einer schematischen Teilansicht das Eingreifen einer topfförmigen Schleifscheibe 10 in die Zahnlücke zwischen zwei Zähnen 2, 3 eines Tellerrads 1. Die topfförmige Schleifscheibe 10 ist im Schnitt gezeigt.

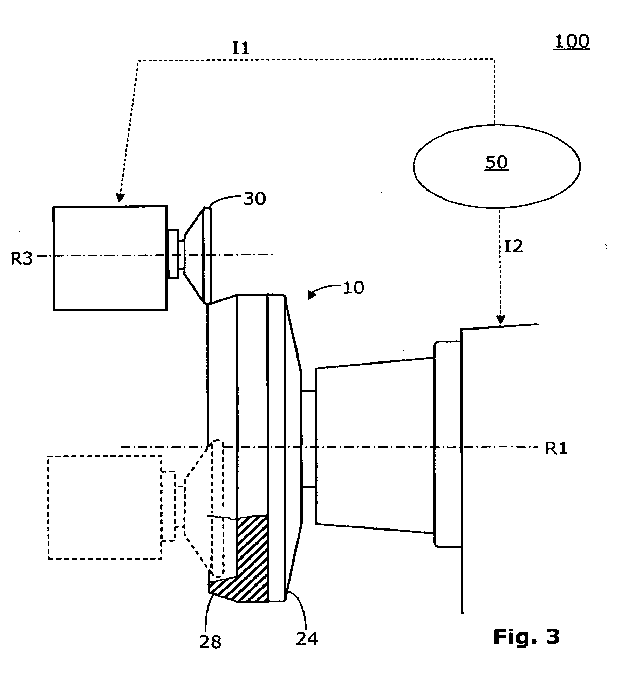

In Fig. 3 ist schematisch angedeutet, wie eine solche topfförmige Schleifscheibe 10 in einer Schleifmaschine 100 mit einer rotationsangetriebenen Abrichtscheibe 30 abgerichtet werden kann. Im gezeigten Moment richtet die Abrichtscheibe 30 die Schleifscheibe 10 am äusseren Umfang ab. Zu diesem Zweck sitzt die Abrichtscheibe 30 außerhalb und oberhalb der Schleifscheibe 10. Um die Schleifscheibe 10 in ihrem Innenraum abzurichten, wird die Abrichtscheibe 30 CNC-gesteuert in eine andere im inneren der Schleifscheibe liegenden Position gebracht und es wird eine Drehrichtungsumkehr vorgenommen. In Fig. 3 ist die Abrichtscheibe 30 in gestrichelter Darstellung in einer Position zum Abrichten der Innenseite des Profils 28 der Schleifscheibe 10 gezeigt. Die CNC-Steuerung 50 (Bahnsteuerung) der Maschine 100 überträgt das erforderliche Profil auf die Schleifscheibe 10, indem die Abrichtscheibe 30 CNC-gesteuert entlang des Profils 28 der Schleifscheibe 10 geführt wird. In Fig. 3 deuten die Signale I1, I2 die entsprechenden CNC-Steuersignale an.

Nur mit einem Schleifwerkzeug 10, dessen Maß- und Formgenauigkeit innerhalb enger Toleranzen liegt, kann eine hochgenaue Werkstückbearbeitung durchgeführt werden. Es muss stets gewährleistet werden, dass der Schleifwerkzeugzustand prozessfähig ist.

Bisher arbeitet man häufig mit Erfahrungswerten, um festzulegen, wann und wie oft ein Schleifwerkzeug 10 abgerichtet werden muss. Je nach Schleifprozess und Grösse des Werkstücks 1, wird das Schleifwerkzeug 10 pro Werkstück 1 ein- oder gar mehrmals abgerichtet. Es liegt auf der Hand, dass eine Abnutzung des Schleifwerkzeugs 10 und/oder des Abrichtwerkzeugs 30 einen negativen Einfluss auf die Eigenschaften des zu schleifenden Werkstücks 1 haben.

Es ist hinlänglich bekannt, dass eine Bearbeitungsmaschine mit einem Koordinaten-Tastsensor ausgestattet werden kann, um während der Bearbeitung oder in Bearbeitungspausen z.B. das Werkstück 1 vermessen zu können. Untersuchungen deuten an, dass ein solcher Koordinaten-Tastsensor jedoch weder für das Vermessen der Abrichtscheibe 20, noch für das Vermessen des Schleifwerkzeugs 1 geeignet zu sein scheint. Ein Abrichtwerkzeug 30 ist typischerweise mit polykristallinem oder Natur-Diamant belegt oder mit einem anderen Hartstoff beschichtet. Der Rubin-Taster eines Koordinaten-Tastsensors könnte beim Kontakt mit einem solchen Abrichtwerkzeug 30 schnell zerstört werden, zumal der Rubin-Taster schleifend zeilenweise entlang der Topografie des Abrichtwerkzeugs 30 geführt werden muss, um die Ist-Geometrie des Abrichtwerkzeugs 30 ermitteln zu können. Die Schleifwerkzeuge 10 sind weniger hart beschichtet als die Abrichtwerkzeuge 30. Die Oberfläche der Schleifwerkzeuge 10 ist jedoch - je nach Wirkrautiefe - relativ rau oder körnig. Daher ist es nur mit großem zeitlichem Aufwand möglich die Ist-Geometrie eines Schleifwerkzeugs 10 zu ermitteln. Ausserdem weist eine solche Topografiemessung aufgrund der Körnigkeit des Schleifwerkzeugs 10 Ungenauigkeiten auf.

Es stellt sich daher die Aufgabe, eine Möglichkeit zu entwickeln, die es erlaubt in einer Schleifmaschine mit abrichtbarem Schleifwerkzeug zu erkennen, ob das Abrichtwerkzeug abgenutzt oder sogar beschädigt ist. Vorzugsweise soll ein Ansatz entwickelt werden, der sich in einer automatisierten Maschinenumgebung einsetzen lässt. Diese Aufgabe wird durch ein Verfahren gemäß Anspruch 1 oder eine Maschine gemäß Anspruch 8 gelöst.

Gemäss Erfindung wird ein Verfahren zum Ermitteln von Topografieabweichungen eines Abrichtwerkzeugs bereit gestellt, das in einer CNC-gesteuerten (Schleif-)Maschine um eine Abrichtachse drehbar antreibbar gelagert ist. Die Maschine umfasst weiterhin ein Schleifwerkzeug, das an einer Schleifwerkzeug-Rotationsachse eingespannt ist und das mit dem Abrichtwerkzeug abgerichtet werden kann. Es handelt sich somit um ein abrichtbares Schleifwerkzeug. Das Abrichtwerkzeug hat anfangs eine Soll-Geometrie und weist nach dem Abrichten eines oder mehrerer Schleifwerkzeuge eine Ist-Geometrie auf, die je nach Situation von der Soll-Geometrie abweichen kann. Die Erfindung zeichnet sich dadurch aus, dass folgende Verfahrensschritte in der (Schleif-) Maschine ausgeführt werden:
a) Ausführen einer Relativbewegung des Abrichtwerkzeugs in Bezug zu dem Schleifwerkzeug, wobei beim Ausführen der Relativbewegung mindestens ein Bereich des Abrichtwerkzeugs in einen sogenannten Transferbereich des Schleifwerkzeugs übertragen wird,
b) Bereitstellen eines Eintauchkörpers aus schleifbarem Material in der Maschine,
c) Ausführen einer relativen Zustellbewegung, um den Transferbereich des Schleifwerkzeugs in die Nähe des Eintauchkörpers zu bringen,
d) Ausführen einer Rotationsbewegung des Schleifwerkzeugs um die Werkzeug-Rotationsachse,
e) Ausführen einer relativen Eintauchbewegung, um den Transferbereich des Schleifwerkzeugs in das Material des Eintauchkörpers einzutauchen, wobei beim Ausführen der relativen Eintauchbewegung eine Übertragung der Topografie des Transferbereichs in den Eintauchkörper in Form einer Negativ-Topografie vorgenommen wird,
f) Durchführen einer automatisierten Abtastbewegung der Negativ-Topografie des Eintauchkörpers mit einem Koordinaten-Abtastsensor,
g) Überliefern von Abtastsignalen vom Koordinaten-Abtastsensor an einen Rechner,
h) Rechnerisches Ermitteln mittels des Rechners mindestens einer Koordinateninformation, die eine Aussage über die Ist-Geometrie des Abrichtwerkzeugs zulässt.

Bei allen Ausführungsformen der Erfindung kann ein Teil der Schritte zeitgleich oder zeitlich überlagert durchgeführt werden. Dies betrifft zum Beispiel die Schritte c) und d) und eventuell auch e).

Die Erfindung geht somit den neuen Weg, das Schleifwerkzeug der Maschine als Transfermittel einzusetzen, um einen Bereich des Abrichtwerkzeugs in einen Transferbereich des Schleifwerkzeugs zu übertragen. Dieser Transferbereich wird dann in einen Eintauchkörper abgebildet und dort mittels eines Koordinaten-Abtastsensors abgetastet. Aufgrund der bekannten Koordinatenzusammenhänge innerhalb der Maschine, kann aus den am Eintauchkörper ermittelten Messwerten berechnet werden, wie die Topografie des Abrichtwerkzeugs aussieht, und/oder ob das Abrichtwerkzeug von einer vorgegebenen Norm und/oder von vorgegebenen Soll-Werten abweicht.

Vorzugsweise werden rechnerisch ausgeführte Koordinatentransformationen eingesetzt, um die ermittelten Messwerte in Aussagen umzurechnen, die sich auf das Abrichtwerkzeug beziehen.

Die Erfindung arbeitet besonders genau, da sowohl das Abrichtwerkzeug als auch der Abtastsensor sich in einer definierten Lage in oder an der Maschine befinden. Daher ist stets ein genauer Bezug gegeben, der im Rahmen der Erfindung vorteilhaft zum Einsatz kommt.

Gerade im Bereich der automatisierten Serienfertigung kann mit der Erfindung rechtzeitig eingegriffen werden, bevor durch ein verschlissenes Abrichtwerkzeug fehlerhafte Schleifwerkzeuge und mit diesen Schleifwerkzeugen nicht geeignete Zahnräder hergestellt werden.

Durch den Einsatz der Erfindung werden Schleifmaschinen wirtschaftlicher und die Bearbeitung kann unter Umständen noch genauer erfolgen als bisher.

Die Erfindung lässt sich vor allem in CNC-gesteuerten Spiralkegelrad-Schleifmaschinen oder auch beim Stirnradschleifen einsetzen.

Die Erfindung ermöglicht eine optimierte Ausnutzung der Maschinenkapazität, eine Verbesserung der Automatisierung des Abrichtprozesses und wiederholbare, höchste Genauigkeiten mit niedrigem Ausschussanteil.

Die Erfindung ermöglicht es die Wechselintervalle der Abrichtrolle zu vergrößern und einen zu häufigen Wechsel der Abrichtrolle zu verhindern. Durch den Einsatz der Erfindung erreicht man eine höhere Profilhaltigkeit bei erhöhten, d.h. verlängerter Lebensdauer der Abrichtrolle.

Ein Verfahren der Erfindung ermöglicht es in der Maschine vorgegebene (programmierte) Abrichtbewegung des Abrichtwerkzeugs anzupassen, damit trotz eines in einem gewissen Masse verschlissenen Abrichtwerkzeugs dieses noch zum Abrichten des Schleifwerkzeugs eingesetzt werden kann. Hierdurch kann das Wechselintervall des Abrichtwerkzeugs optimiert werden.

Es geht hier um bahngebundene Verfahren.

Die Erfindung lässt sich vor allem auf diamant-belegte, Bornitridbeschichtete (z.B. cubic boron nitride, CBN™), Siliziumkarbid-beschichtete und Aluminiumoxid-beschichtete Schleifwerkzeuge anwenden.

Teilweise sind die Schleifmaschinen mit einer Diamantabrichtrolle ausgestattet, die fest mit dem Maschinenbett verbunden ist, um so eine sehr gute Präzision zu erzielen. D.h. die Diamantabrichtrolle benötigt hier keine zusätzliche Maschinenachse (ausser der eigenen Rotationsachse). In einem solchen Fall wird je nach Ausführungsform das Schleifwerkzeug gegen die Diamantabrichtrolle bewegt, während diese sich dreht, um dann von dort schleifend im Eintauchkörper abgebildet zu werden.

Einen wesentlichen Einfluss auf die Genauigkeit des Verfahrens üben die statischen und dynamischen Steifigkeiten des Eintauchkörpers und dessen Aufspannung oder Befestigung aus. Vorzugsweise ist daher der Eintauchkörper bei allen Ausführungsformen fest mit der Maschine, vorzugsweise direkt am Maschinenbett, verbunden.

Vorzugsweise ist bei allen Ausführungsformen eine Kühlmitteldüse im Bereich des Eintauchkörpers angebracht, um eine optimal angepasste Kühlschmierung zu ermöglichen, während die Geometrie schleifend im Eintauchkörper abgebildet wird.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1**: zeigt eine schematische Seitenansicht eines Teils einer Schleifscheibe während des Bearbeitens der Zahnflanken einer Zahnlücke;
- **FIG. 2**: zeigt eine schematische Schnitt- und Seitenansicht eines Teils eines Schleiftopfs während des Bearbeitens der Zahnflanken einer Zahnlücke eines Tellerrads;
- **FIG. 3**: zeigt eine schematische Seitenansicht eines Teils einer Schleifmaschine mit einem Schleiftopf, der mittels einer Abrichtscheibe am Aussenumfang abgerichtet wird (das Abrichten des Innenumfangs mit der Abrichtscheibe ist in strichlierter Darstellung angedeutet);
- **FIG. 4**: zeigt eine stark schematisierte Ansicht einer Schleifscheibe zum Stirnradschleifen, einer Abrichtscheibe und eines Eintauchkörpers der Erfindung;
- **FIG. 5A**: zeigt eine stark schematisierte Ansicht einer Schleifscheibe und einer Abrichtscheibe beim Eintauchen in einen Transferbereich der Schleifscheibe;
- **FIG. 5B**: zeigt eine stark schematisierte Ansicht der Schleifscheibe beim Überführen zu einem Eintauchkörper;
- **FIG. 5C**: zeigt eine stark schematisierte Ansicht das Eintauchen des Transferbereichs der Schleifscheibe in den Eintauchkörper;
- **FIG. 5D**: zeigt eine stark schematisierte Ansicht das Abtasten des Profils des Eintauchkörpers;
- **FIG**. **6**: zeigt eine schematische Seitenansicht einer Schleifmaschine nach Fig. 2, wobei der Schleiftopf teilweise geschnitten gezeigt ist, und die Schleifmaschine einen Eintauchkörper sowie einen Koordinaten-Abtastsensor umfasst.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Sämtliche Figuren sind schematisch und nicht-maßstäblich.

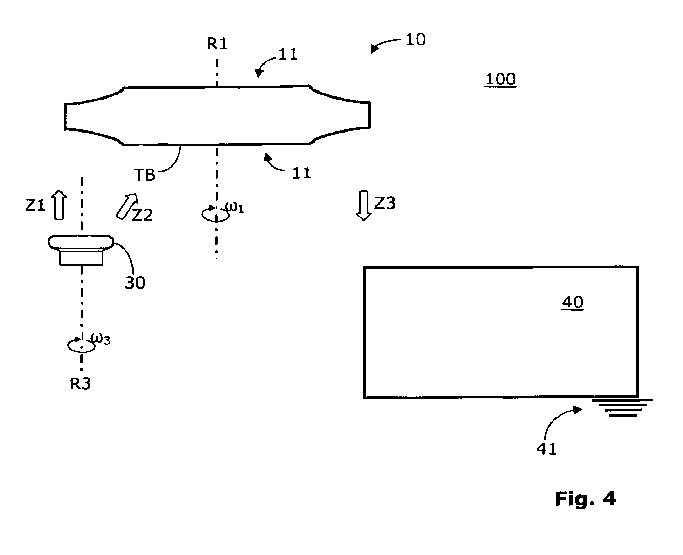

Das Prinzip der Erfindung wird im Folgenden anhand der stark vereinfachten Prinzipdarstellung der Fig. 4 beschrieben. Fig. 4 zeigt lediglich die wesentlichen Elemente einer Schleifmaschine 100 und die grundlegenden (Relativ-) Bewegungen dieser Elemente.

Es ist eine Seitenansicht einer (Profil-)Schleifscheibe 10 zu erkennen, die um eine Werkzeugachse R1 drehangetrieben werden kann. Die Drehbewegung der Schleifscheibe 10 ist durch ω₁ symbolisiert. Eine (Form-)Abrichtscheibe 30 ist maßstäblich zu der Schleifscheibe 10 gezeigt. Die Abrichtscheibe 30 kann um eine Abrichtachse R3 drehangetrieben werden. Diese Drehbewegung ist durch ω₃ symbolisiert. Um die Prinzipdarstellung der Fig. 4 nicht zu verkomplizieren, ist durch einen Blockpfeil Z1 angedeutet, dass die Abrichtscheibe 30 relativ zu der Schleifscheibe 10 entlang einer sogenannte Bearbeitungsbewegung bewegt werden kann. Die entsprechende Bewegung Z1 kann von der Abrichtscheibe 30 oder der Schleifscheibe 10 durchgeführt werden. Es geht dabei nicht um die Bearbeitungsbewegung, die ausgeführt wird, wenn die Schleifscheibe 10 in eine Zahnlücke an einem Werkstück (z.B. ein Werkstück 1 nach Fig. 1) eingeführt wird, sondern es geht um das reguläre abrichtende Bearbeiten (Abrichten) der Schleifscheibe 10 mit der Abrichtscheibe 30, wie hinlänglich aus dem Stand der Technik bekannt. Normalerweise ist die Bearbeitungsbewegung Z1 eine CNC-gesteuerte Relativbewegung im dreidimensionalen Raum.

Gemäss Erfindung wird von Zeit zu Zeit eine vordefinierte Relativbewegung des Abrichtwerkzeugs 30 in Bezug zu dem Schleifwerkzeug 10 ausgeführt, die hier mit Z2 bezeichnet wird. Beim Ausführen dieser Relativbewegung Z2, wird mindestens ein Konturbereich des Abrichtwerkzeugs 30 in einen Transferbereich TB des Schleifwerkzeugs 10 oder einer speziell für diese Aufgabe eingespannten Schleifwerkzeugs übertragen. Dieses spezielle Schleifwerkzeug ist eine nur zur Vermessung des Abrichtwerkzeugs 30 genutzte Schleifscheibe. Der Begriff Transferbereich TB wird hier verwendet, um aufzuzeigen, dass es sich nicht um einen Bereich des Schleifwerkzeugs 10 handelt, der zum schleifenden Bearbeiten des Werkstücks (z.B. ein Werkstück 1 nach Fig. 1) zum Einsatz kommt oder dass es um einen Bereich des speziellen Schleifwerkzeugs geht, wobei dieses spezielle Schleifwerkzeug nicht zum schleifenden Bearbeiten des Werkstücks eingesetzt wird. Bei einer Schleifscheibe nach Fig. 4 kann die Transferbereich TB zum Beispiel im Bereich einer der Stirnflächen 11 liegen, wie in Fig. 4 angedeutet. Der Blockpfeil, der die Relativbewegung Z2 darstellt, zeigt daher im gezeigten Beispiel schräg in Richtung des Transferbereichs TB.

Als ein wesentlicher Schritt der Erfindung wird ein Konturbereich des Abrichtwerkzeugs 30 in den Transferbereich TB des Schleifwerkzeugs 10 übertragen. Dabei wird vorzugsweise nur der Konturbereich des Abrichtwerkzeugs 30 übertragen, der beim regulären Abrichten der Schleifscheibe 10 eingesetzt wird. Ein Abbilden aller anderen Bereiche des Abrichtwerkzeugs 30 ist nicht unbedingt erforderlich.

Nun wird in einem nachgelagerten Schritt eine relative Zustellbewegung Z3 ausgeführt, die in Fig. 4 durch einen weiteren Blockpfeil angedeutet ist. Im Rahmen dieser relativen Zustellbewegung Z3, wird der Transferbereich TB des Schleifwerkzeugs 100 in die Nähe eines stationären oder auf einem in der Maschine bewegbaren Körper befestigten Eintauchkörpers 40 gebracht. In Fig. 4 ist der Eintauchkörper 40 durch ein Rechteck (z.B. eine rechteckiges Blechstück) dargestellt. Da die statischen und dynamischen Steifigkeiten des Eintauchkörpers 40 und dessen Aufspannung oder Befestigung einen grossen Einfluss auf die Genauigkeit des erfindungsgemässen Verfahrens haben können, ist der Eintauchkörper 40 vorzugsweise bei allen Ausführungsformen fest mit der Maschine 100, vorzugsweise direkt am Maschinenbett, verbunden. In Fig. 4 ist diese feste (bei Bedarf lösbare) Verbindung mit dem Bezugszeichen 41 gekennzeichnet.

Dann wird eine Rotationsbewegung ω1 des Schleifwerkzeugs 10 um die Werkzeug-Rotationsachse R1 ausgeführt, während im Rahmen einer vordefinierten, relativen Eintauchbewegung der Transferbereich TB des Schleifwerkzeugs 10 in das Material des Eintauchkörpers 40 eingetaucht wird. Die vordefinierte, relative Eintauchbewegung wird so durchgeführt, dass eine Übertragung der Topografie des Transferbereichs TB in den Eintauchkörper 40 in Form einer Negativ-Topografie vorgenommen wird. D.h. der Transferbereichs TB des Schleifwerkzeugs 10 wird in den Eintauchkörper 40 "abgebildet". Da der Transferbereich TB vorher mit der Kontur der Abrichtscheibe 30 bearbeitet wurde, wird beim Übertragen der Topografie des Transferbereichs TB eine negative "Abbildung" der Kontur der Abrichtscheibe 30 am Eintauchkörper 40 ausgebildet. Der Transferbereich TB des Schleifwerkzeugs 10 dient im Rahmen der Erfindung lediglich als Formvermittler.

Nachdem somit auf indirektem Wege die momentane Ist-Form der Abrichtscheibe 30 auf den Eintauchkörper 40 übertragen wurde, wird durch eine automatisierte Abtastbewegung in der Maschine 100 die Negativ-Topografie (auch Negativform NF genannt) des Eintauchkörpers 40 mit einem Koordinaten-Abtastsensor ermittelt. Abtastsignale, die vom Koordinaten-Abtastsensor erfasst wurden, werden an einen Rechner übermittelt. Dieser Rechner kann bei allen Ausführungsformen Bestandteil der Maschine 100 sein, oder es kann sich um einen (Arbeitsplatz-)Rechner handeln, der kommunikationstechnisch mit der Maschine 100 verknüpfbar ist.

Mittels des Rechners wird nun rechnerisch mindestens eine Koordinateninformation ermittelt, die eine Aussage über die Ist-Geometrie des Abrichtwerkzeugs 30 zulässt. Bei dieser einen Koordinateninformation kann es sich zum Beispiel um den momentanen Maximaldurchmesser des Abrichtwerkzeugs 30 handeln.

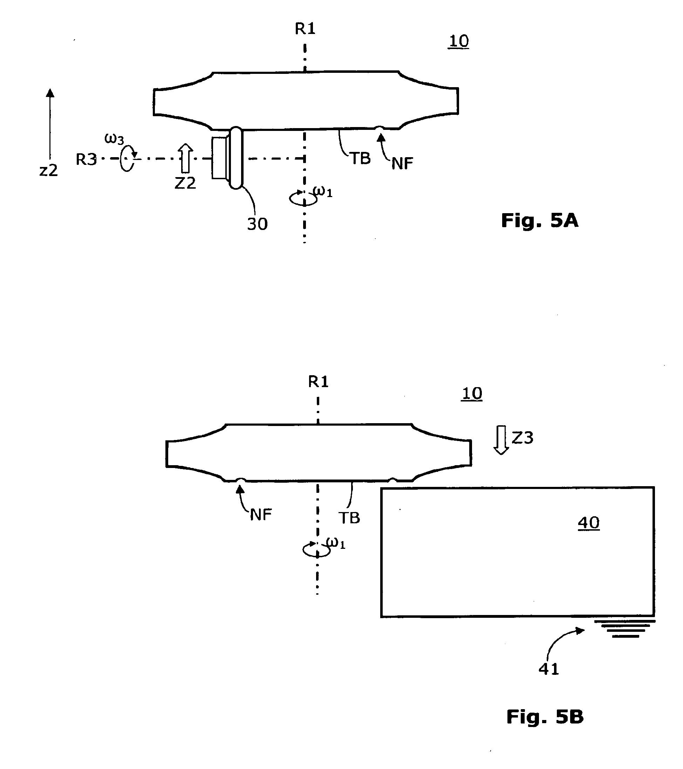

Das beschriebene Prinzip wird im Folgenden anhand eines stark vereinfachten Beispiels und mit Bezug auf die Figuren 5A bis 5D weiter veranschaulicht.

In Fig. 5A ist schematisch gezeigt, wie das Abrichtwerkzeug 30, nachdem es gegenüber Fig. 4 um 90 Grad geschwenkt wurde (in speziellen Fällen kann das Schleifwerkzeug 10 geschwenkt werden, während das Abrichtwerkzeug 30 in seiner ursprünglichen Ausrichtung stehen bleibt), im Rahmen der Relativbewegung Z2 im Transferbereich TB in die Stirnfläche 11 des Schleifwerkzeugs 10 eintaucht. Der Einfachheit halber taucht im gezeigten Beispiel das Abrichtwerkzeug 30 parallel zur Richtung der Werkzeugachse R1 in den Transferbereich TB ein. Da sich mindestens während dieses Eintauchens sowohl das Abrichtwerkzeug 30 als auch das Schleifwerkzeug 10 drehen (d.h. ω₁ ≠ 0; ω₃ ≠ 0), wird im Transferbereich eine ringförmige, konzentrisch zur Werkzeugachse R1 liegende, "Spur" erzeugt. Diese "Spur" stellt eine Negativform NF der Kontur des Abrichtwerkzeugs 30 dar.

Da ein Abtasten der rauen Oberfläche des Schleifwerkzeugs 10 mit Nachteilen verbunden ist, wie eingangs erwähnt, wird diese Negativform NF in einem nächsten Schritt in einen Eintauchkörper 40 übertragen. Dieser Schritt ist in Fig. 5B schematisch gezeigt. In diesem Schritt wird die relative Zustellbewegung Z3 so ausgeführt, dass im Rahmen dieser relativen Zustellbewegung Z3 der Transferbereich TB des Schleifwerkzeugs 100 in die Nähe eines stationären (an der Maschine 100 befestigten) Eintauchkörpers 40 oder in Richtung eines in der Maschine bewegbaren Eintauchkörpers 40 gebracht wird. In Fig. 5B ist der Eintauchkörper 40 durch ein Rechteck (z.B. in Form eines rechteckigen Blechstücks) dargestellt.

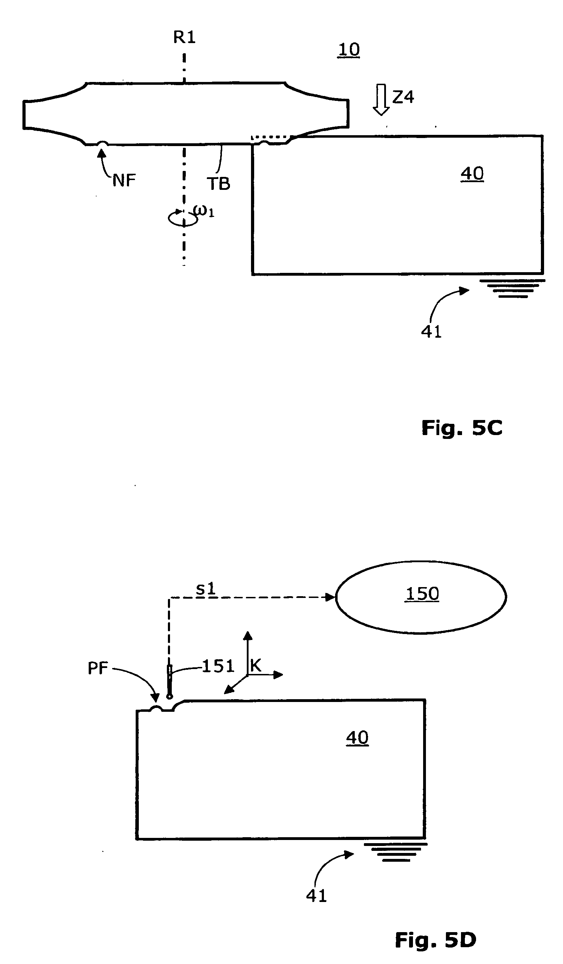

In Fig. 5C ist gezeigt, wie durch das Ausführen einer vordefinierten, relativen Eintauchbewegung Z4 der Transferbereich TB des Schleifwerkzeugs 10 in das Material des Eintauchkörpers 40 übertragen wird. Beim Ausführen der Eintauchbewegung Z4 wird im Prinzip eine Übertragung der Topografie des Transferbereichs TB in den Eintauchkörper 30 vorgenommen. In Bezug auf die Topografie bzw. Kontur des Abrichtwerkzeugs 30, wird die in den Eintauchkörper 30 übertragene Form als Positiv-Topografie (auch Positivform PF genannt) bezeichnet.

Um diese Positivform PF nun messtechnisch erfassen zu können, wird eine automatisierte Abtastbewegung der Topografie PF des Eintauchkörpers 40 mit einem Koordinaten-Abtastsensor 151 durchgeführt, wie in Fig. 5D schematisch angedeutet. Bei einem stationär befestigten Eintauchkörper muss sichergestellt werden, dass der Taster kollisionsfrei abtasten kann. Bei der Befestigung des Eintauchkörpers auf einem bewegbaren Körper kann sich dieser Körper in eine optimale Abtastposition bewegen. Das Abtasten kann taktil oder berührungslos erfolgen. Hierzu sind verschiedene Verfahren und Mittel bekannt, auf die der Fachmann problemlos zurückgreifen kann. Durch ein Koordinatensystem K ist in Fig. 5D angedeutet, dass der Koordinaten-Abtastsensor 151 relativ zu der Positivform PF geführt werden kann, um diese Form PF abzutasten. Beim Abtasten werden Abtastsignale s1 bereit gestellt. Diese Abtastsignale s1 werden von dem Koordinaten-Abtastsensor 151 an einen Rechner 150 übergeben, wie in Fig. 5D durch einen strichlierten Pfeil angedeutet.

Anhand der Abtastsignale s1 kann der Rechner 150 z.B. die gesamte Positivform PF oder einen oder mehrere Detailaspekte der Positivform PF ermitteln (berechnen), falls dies erwünscht ist. Auf dem Wege einer oder mehrerer Koordinatentransformationen, kann der Rechner 150 aus den Abtastsignalen s1 direkt oder über Zwischenschritte mindestens eine Koordinateninformation ermitteln, die eine Aussage über die Ist-Geometrie des Abrichtwerkzeugs 30 zulässt. Wenn man für den Moment davon ausgeht, dass die Übertragungsschritte allesamt verlustfrei verlaufen und dass keine Ungenauigkeiten entstehen, so entspricht die Positivform PF am Eintauchkörper 40 eins zu eins der momentanen Istform oder Ist-Geometrie des Abrichtwerkzeugs 30. Diese vereinfachte Annahme gilt nur, wenn das Abrichtwerkzeug 30 mit einer einfachen, linearen Eintauchbewegung parallel zur Achse R1 in den Transferbereich eingetaucht wurde. Wenn beim Eintauchen weitere Bewegungen ausgeführt werden (z.B. ein relatives Schwenken des Abrichtwerkzeugs 30 in Bezug zum Schleifwerkzeug 10), dann müssen beim Ermitteln/Berechnen der Istform oder Ist-Geometrie des Abrichtwerkzeugs 30 die Relativbewegungen berücksichtigt werden. Dies ist in jedem Fall möglich, da es sich bei diesen Relativbewegungen um vordefinierte, relative Eintauchbewegung Z4 handelt. D.h. der Rechner 150 kennt diese Eintauchbewegungen Z4 oder kann sie in das Koordinatensystem K abbilden.

Da die Übertragungsschritte, die gemäss Erfindung ausgeführt werden, in der Praxis stets mit Ungenauigkeiten behaftet sind, muss man beim Ermitteln/Berechnen der Istform oder Ist-Geometrie mit Toleranzen rechnen.

Wenn zum Beispiel der Maximaldurchmesser des Abrichtwerkzeugs 30 mit der Zeit abnimmt (der Durchmesser wird durch Abnutzung immer kleiner), wird auch die Positivform PF in Fig. 5D immer kleiner. Wenn zum Beispiel der Dicke des Abrichtwerkzeugs 30 (parallel zur Achse R3) mit der Zeit abnimmt (die Dicke wird durch Abnutzung immer kleiner), wird die Positivform PF in Fig. 5D immer schmaler.

Vorzugsweise wird die mindestens eine Koordinateninformation gemäss Erfindung dazu eingesetzt, um beim Abrichten der Schleifscheibe 10 mit dem Abrichtwerkzeug 30 die relativen Bearbeitungsbewegungen (Abrichtbewegungen) entsprechend anzupassen. Beispielsweise muss bei einem Abrichtwerkzeug 30 mit verkleinertem Maximaldurchmesser die relative Zustellbewegung Z2 in Fig. 5A vergrössert werden, damit das Abrichtwerkzeug 30 trotz reduziertem Umfang immer noch mit der Schleifscheibe 10 in Kontakt gebracht werden kann. Auch aus dieser Tatsache kann der Rechner 150 bereits eine wertvolle Information ableiten. Wenn es z.B. bei einer neuen Abrichtscheibe 30 (d.h. es handelt sich um eine Abrichtscheibe 30, welche die Soll-Form aufweist) bei einer Koordinate z2=0 zu einer Berührung mit dem Transferbereich TB der Schleifscheibe 10 kommt, dann kann beim Eintauchen Z2 einer abgenutzten Abrichtscheibe 30 zu einem späteren Zeitpunkt ermittelt, bei welcher Koordinatenposition z2 die Berührung auftritt. Wenn im Zeitpunkt der Berührung z.B. z2=1mm gilt, dann hat sich der Radius der Abrichtscheibe 30 um 1mm reduziert.

Da sich zusätzlich zu der Umfangsreduktion meist auch andere Veränderungen der Topografie bzw. Kontur des Abrichtwerkzeugs 30 ergeben, werden bei bevorzugten Ausführungsformen die CNC-gesteuerten Bewegungsabläufe in zwei oder gar drei Dimensionen der sich ändernden Ist-Topografie angepasst.

Gemäss einer bevorzugten Ausführungsform der Erfindung kann auch mindestens ein Grenzwert vorgegeben werden, bei dessen Erreichen das Abrichtwerkzeug 30 ausgetauscht werden sollte.

Ausserdem oder alternativ kann eine Betrachtung der Oberfläche des Positivform PF am Eintauchkörper 40 mit dem Koordinaten-Abtastsensor 151 oder mit einem anderen Abtastwerkzeug oder Sensor vorgenommen werden, um z.B. rechtzeitig Oberflächenveränderungen am Abrichtwerkzeug 30 anhand einer Auswertung der Signale des Sensors erkennen zu können. Ein solches anderes Abtastwerkzeug oder ein solcher Sensor kann zusätzlich zu dem Koordinaten-Abtastsensor 151 in der Maschine 100 vorgesehen werden.

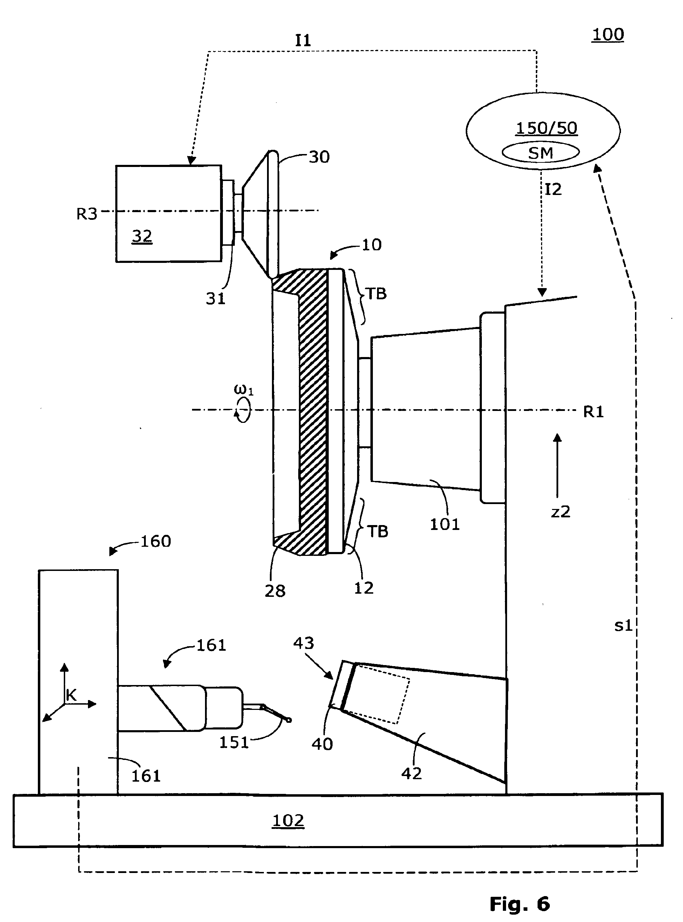

Fig. 6 zeigt eine schematische Seitenansicht einer Schleifmaschine 100 nach Fig. 2, wobei der Schleiftopf 10 teilweise geschnitten gezeigt ist, und die Schleifmaschine 100 einen Eintauchkörper 40 sowie einen Koordinaten-Abtastsensor 151 umfasst.

Bei der gezeigten, beispielhaften Ausführungsform der Fig. 6, kommt eine Schleifscheibe als Schleifwerkzeug 10 zum Einsatz, die in einem rückwärtigen Bereich 12 (der hier in Richtung Werkzeugspindel 101 gerichtet ist) den Transferbereich TB aufweist. Der Transferbereich TB verläuft hier ringförmig entlang einer leicht konischen Kegelstumpffläche.

Der Eintauchkörper 40 kann bei allen Ausführungsformen direkt mit dem Maschinenbett 102 oder mit einem in der Maschine bewegbaren Körper der Maschine 100 verbunden sein. Vorzugsweise kommt bei allen Ausführungsformen eine stabile Halterung 42 zum Einsatz, die ein ortsfestes und stabiles Einspannen des Eintauchkörpers 40 ermöglicht. In der gezeigten Ausführungsform ist der vorderste Bereich 43 des Eintauchkörpers 40 so angeordnet, dass der erforderliche Kontakt des Transferbereichs TB des Schleifwerkzeugs 10 mit dem vordersten Bereich 43 problemlos durch das Ausführen CNC-gesteuerter Bewegungen hergestellt werden kann. Im gezeigten Beispiel muss die Werkzeugspindel 101 samt Schleifwerkzeug 10 eine lineare Bewegung in negativer z2-Richtung ausführen und eventuell eine lineare Bewegung parallel zur R1-Achse, um den Kontakt herzustellen.

Vorzugsweise ist der Koordinaten-Abtastsensor 151 als Teil eines Koordinatenmesssystems 160 bei allen Ausführungsformen auch mit dem Maschinenbett 102 der Maschine 100 verbunden, wie in Fig. 6 angedeutet. Das Koordinatenmesssystem 160 kann zum Beispiel einen Messturm 161 umfassen, der einen präzise geführten, beweglichen Ausleger 162 umfasst. Der Ausleger 162 kann zum Beispiel ein Schlittensystem mit Parallelogrammaufbau gemäss dem EP-Patent EP 1 589 317 B1 der Firma Klingelnberg GmbH haben. Das Koordinatensystem K am Messturm 161 soll anzeigen, dass es sich vorzugsweise um ein 3D-Koordinatenmesssystem 160 handelt, das bei allen Ausführungsformen der Erfindung zum Einsatz kommt.

Um die relevante Topografie des Abrichtwerkzeugs 30 mit dem Transferbereich TB in Kontakt bringen zu können, müssen entsprechende Relativbewegungen ausgeführt werden, wie beschrieben. Die entsprechenden Achsen sind hier nicht zeigt. Vorzugsweise werden diese Relativbewegungen bei allen Ausführungsformen der Erfindung durch die CNC-Steuerung 50 kontrolliert/koordiniert.

In Fig. 6 ist angedeutet, dass die CNC-Steuerung 50 die Funktion des erwähnten Rechners 150 übernehmen kann, oder umgekehrt. Steuerung 50 und Rechner 150 können aber auch separat ausgeführt sein.

Die Erfindung kommt vorzugsweise bei allen Ausführungsformen in einer CNC-gesteuerten Maschine 100 zum Einsatz, die eine CNC-Steuerung 50 und eine Werkzeugspindel 101 zum drehantreibbaren Befestigen eines Schleifwerkzeugs 10 umfasst. Weiterhin umfasst die Maschine 100 eine Vorrichtung 32, die eine Abrichtspindel 31 mit einem Abrichtwerkzeug 30 aufweist, und die ein Koordinatenmesssystem 160 umfasst, das einen Abtastsensor 151 trägt. Die Maschine 100 zeichnet sich dadurch aus, dass sie zusätzlich einen Eintauchkörper 40 umfasst, der mit der Maschine 100 verbunden ist. Der Eintauchkörper 40 ist so innerhalb der Maschine 100 angeordnet, dass ein Transferbereich TB des Schleifwerkzeugs 10 mit dem Eintauchkörper 40 in Kontakt gebracht werden kann, während sich das Schleifwerkzeug 10 um die Werkzeugachse R1 der Werkzeugspindel 101 dreht. Weiterhin kann das Abrichtwerkzeug 30 mit dem Transferbereich TB des Schleifwerkzeugs 10 in Kontakt gebracht werden, während sich das Schleifwerkzeug 10 um die Werkzeugachse R1 und/oder das Abrichtwerkzeug 30 um die Abrichtachse R3 der Abrichtspindel 31 dreht.

Vorzugsweise umfassen alle Ausführungsformen der Maschine 100 ein Softwaremodul SM (siehe Fig. 6), das dazu ausgelegt ist, Signale s1 des Koordinatenmesssystems 160 auszuwerten und mindestens eine Koordinateninformation zu ermitteln, die eine Aussage über die Ist-Geometrie des Abrichtwerkzeugs 30 zulässt.

Vorzugsweise ist das Softwaremodul SM bei allen Ausführungsformen so ausgelegt, dass mindestens eine rechnerische Koordinatentransformation ausgeführt werden kann, um die Koordinateninformation zu ermitteln.

Vorzugsweise umfassen alle Ausführungsformen der Erfindung eine Nachjustieren oder Kompensieren von Abnutzungen des Abrichtwerkzeugs 30. Dazu kann die Steuerung 50 und/oder der Rechner 150 auf die CNC-gesteuerten Bewegungsabläufe der Maschine 100 Einfluss nehmen.

Vorzugsweise ist das Softwaremodul SM bei allen Ausführungsformen so ausgelegt, dass eine Mitteilung oder ein Signal abgegeben wird, wenn die Aussage über die Ist-Geometrie des Abrichtwerkzeugs 30 anzeigt, dass das Abrichtwerkzeug 30 außerhalb eines Toleranzwertes liegt und/oder wenn ein anderes Bewertungskriterium nicht erfüllt ist.

Vorzugsweise ist das Softwaremodul SM bei allen Ausführungsformen so ausgelegt, dass die Mitteilung oder das Signal einen Wechsel des Abrichtwerkzeugs 30 auslöst.

## Patentansprüche

1. Verfahren zum Ermitteln von Topografieabweichungen eines Abrichtwerkzeugs (30), das in einer CNC-gesteuerten Maschine (100) um eine Abrichtachse (R3) drehbar antreibbar gelagert ist, die ein abrichtbares Schleifwerkzeug (10) umfasst, das an einer Werkzeug-Rotationsachse (R1) eingespannt ist, wobei das Abrichtwerkzeug (30) eine Soll-Geometrie hat und wobei das Abrichtwerkzeug (30) nach einem Abrichten des Schleifwerkzeugs (10) in der Maschine (100) eine Ist-Geometrie aufweist, die von der Soll-Geometrie abweicht, **gekennzeichnet durch** folgende Schritte:
a) Ausführen einer vordefinierten Relativbewegung des Abrichtwerkzeugs (30) in Bezug zu dem Schleifwerkzeug (10), wobei beim Ausführen der Relativbewegung mindestens ein Konturbereich des Abrichtwerkzeugs (30) in einen Transferbereich des Schleifwerkzeugs (10) übertragen wird,
b) Bereitstellen eines Eintauchkörpers (40) aus schleifbarem Material in der Maschine (100),
c) Ausführen einer relativen Zustellbewegung (Z3), um den Transferbereich des Schleifwerkzeugs (10) in die Nähe des Eintauchkörpers (40) zu bringen,
d) Ausführen einer Rotationsbewegung (ω₁) des Schleifwerkzeugs (10) um die Schleifwerkzeug-Rotationsachse (R1),
e) Ausführen einer vordefinierten, relativen Eintauchbewegung (Z4), um den Transferbereich des Schleifwerkzeugs (10) in das Material des Eintauchkörpers (40) einzutauchen, wobei beim Ausführen der Eintauchbewegung (Z4) eine Übertragung der Topografie des Transferbereichs in einen Abbildungsbereich des Eintauchkörpers (40) in Form einer Negativ-Topografie vorgenommen wird,
f) Durchführen einer automatisierten Abtastbewegung der Topografie des Eintauchkörpers (40) im Abbildungsbereich mit einem Koordinaten-Abtastsensor,
g) Überliefern von Abtastsignalen vom Koordinaten-Abtastsensor an einen Rechner,
h) Rechnerisches Ermitteln mittels des Rechners mindestens einer Koordinateninformation, die eine Aussage über die Ist-Geometrie des Abrichtwerkzeugs (30) zulässt.

2. Verfahren nach Anspruch 1, **dadurch gekennzeichnet, dass** ein Teil der Schritte zeitgleich oder zeitlich überlagert durchgeführt werden.

3. Verfahren nach Anspruch 1 oder 2, **dadurch gekennzeichnet, dass** beim Ausführen der vordefinierten Relativbewegung des Abrichtwerkzeugs (30) in Bezug zu dem Schleifwerkzeug (10) das Abrichtwerkzeug (30) mit dem Schleifwerkzeug (10) in Kontakt gebracht wird, während sich das Abrichtwerkzeug (30) um die Abrichtachse (R3) und das Schleifwerkzeug (10) um die Werkzeug-Rotationsachse (R1) drehen, um so einen Teil der Topografie des Abrichtwerkzeugs (30) in den Transferbereich des Schleifwerkzeugs (10) zu übertragen.

4. Verfahren nach Anspruch 1, 2 oder 3, **dadurch gekennzeichnet, dass** nach der Übertragung der Topografie eine relative Rückzugsbewegung ausgeführt wird, um den Transferbereich aus dem Material des Eintauchkörpers (40) zu entnehmen.

5. Verfahren nach Anspruch 1, 2, 3 oder 4, **dadurch gekennzeichnet, dass** der Koordinaten-Abtastsensor ein integrierter Bestandteil der Maschine (100) ist.

6. Verfahren nach Anspruch 1, 2, 3 oder 4, **dadurch gekennzeichnet, dass** es das Verfahren ermöglicht in der Maschine (100) durch den Einsatz des Eintauchkörpers (40) auf indirektem Wege eine Ermittlung der Ist-Geometrie des Abrichtwerkzeugs (30) vorzunehmen, wobei bei dieser Ermittlung der Ist-Geometrie das Abrichtwerkzeug (30) nicht entnommen oder umgespannt werden muss.

7. Verfahren nach einem der Ansprüche 1 bis 6, **dadurch gekennzeichnet, dass** es das Verfahren ermöglicht in der Maschine (100) eine Abrichtbewegung des Abrichtwerkzeugs (30) anzupassen, damit trotz eines in einem gewissen Masse verschlissenen Abrichtwerkzeugs (30) dieses noch zum Abrichten des Schleifwerkzeugs (10) eingesetzt werden kann.

8. CNC-gesteuerte Maschine (100) mit einer CNC-Steuerung (50), einer Werkzeugspindel (101) zum drehantreibbaren Befestigen eines Schleifwerkzeugs (10), mit einer Vorrichtung (32), die eine Abrichtspindel (31) mit einem Abrichtwerkzeug (30) umfasst, und mit einem Koordinatenmesssystem (160), das einen Abtastsensor (151) umfasst, **dadurch gekennzeichnet, dass** die Maschine (100) zusätzlich einen Eintauchkörper (40) umfasst, der mit der Maschine (100) oder mit einem in der Maschine bewegbaren Körper verbunden ist, wobei der Eintauchkörper (40) so innerhalb der Maschine (100) angeordnet ist, dass ein Transferbereich (TB) des Schleifwerkzeugs (10) mit dem Eintauchkörper (40) in Kontakt gebracht werden kann, während sich das Schleifwerkzeug (10) um eine Werkzeugachse (R1) der Werkzeugspindel (101) dreht, und wobei das Abrichtwerkzeug (30) mit dem Transferbereich (TB) des Schleifwerkzeugs (10) in Kontakt gebracht werden kann, während sich das Schleifwerkzeug (10) um die Werkzeugachse (R1) und/oder das Abrichtwerkzeug (30) um eine Abrichtachse (R3) der Abrichtspindel (31) dreht, wobei die Maschine (100) ein Softwaremodul (SM) umfasst, das dazu ausgelegt ist, Signale (s1) des Koordinatenmesssystems (160) auszuwerten und mindestens eine Koordinateninformation zu ermitteln, die eine Aussage über die Ist-Geometrie des Abrichtwerkzeugs (30) zulässt.

9. Maschine (100) nach Anspruch 8, **dadurch gekennzeichnet, dass** das Softwaremodul (SM) mindestens eine rechnerische Koordinatentransformation ausführt, um die Koordinateninformation zu ermitteln.

10. Maschine (100) nach Anspruch 9, **dadurch gekennzeichnet, dass** das Softwaremodul (SM) eine Mitteilung oder ein Signal abgibt, wenn die Aussage über die Ist-Geometrie des Abrichtwerkzeugs (30) anzeigt, dass das Abrichtwerkzeug (30) außerhalb eines Toleranzwertes liegt und/oder ein anderes Bewertungskriterium nicht erfüllt.

11. Maschine (100) nach Anspruch 10, **dadurch gekennzeichnet, dass** die Mitteilung oder das Signal einen Wechsel des Abrichtwerkzeugs (30) auslöst.

## Claims

1. A method for ascertaining topography deviations of a dressing tool (30), which is mounted so it is drivable in a rotatable manner about a dressing axis (R3) in a CNC-controlled machine (100), and which comprises a dressable grinding tool (10), which is chucked on a tool axis of rotation (R1), wherein the dressing tool (30) has a setpoint geometry and wherein the dressing tool (30), after the dressing of the grinding tool (10) in the machine (100), has an actual geometry, which deviates from the setpoint geometry, **characterized by** the following steps:
a) executing a predefined relative movement of the dressing tool (30) in relation to the grinding tool (10), wherein during the execution of the relative movement, at least one contour region of the dressing tool (30) is transferred into a transfer region of the grinding tool (10),
b) providing a plunging body (40), made of material which can be ground, in the machine (100),
c) executing a relative infeed movement (Z3) to bring the transfer region of the grinding tool (10) into the vicinity of the plunging body (40),
d) executing a rotation movement (ω₁) of the grinding tool (10) about the grinding tool axis of rotation (R1),
e) executing a predefined, relative plunging movement (Z4) to plunge the transfer region of the grinding tool (10) into the material of the plunging body (40), wherein during the execution of the plunging movement (Z4), a transfer of the topography of the transfer region into an imaging region of the plunging body (40) in the form of a negative topography is performed,
f) carrying out an automated scanning movement of the topography of the plunging body (40) in the imaging region using a coordinate scanning sensor,
g) transferring scanning signals from the coordinate scanning sensor to a computer,
h) computer ascertainment by means of the computer of at least one coordinate information, which permits a statement about the actual geometry of the dressing tool (30).

2. The method according to claim 1, **characterized in that** a part of the steps are carried out simultaneously or chronologically overlapping.

3. The method according to claim 1 or 2, **characterized in that** during the execution of the predefined relative movement of the dressing tool (30) in relation to the grinding tool (10), the dressing tool (30) is brought into contact with the grinding tool (10), while the dressing tool (30) rotates about the dressing axis (R3) and the grinding tool (10) rotates about the tool axis of rotation (R1), to thus transfer a part of the topography of the dressing tool (30) into the transfer region of the grinding tool (10).

4. The method according to claim 1, 2, or 3, **characterized in that** after the transfer of the topography, a relative retraction movement is executed to remove the transfer region from the material of the plunging body (40).

5. The method according to claim 1, 2, 3, or 4, **characterized in that** the coordinate scanning sensor is an integral component of the machine (100).

6. The method according to claim 1, 2, 3, or 4, **characterized in that** the method enables an ascertainment of the actual geometry of the dressing tool (30) to be performed indirectly in the machine (100) by way of the usage of the plunging body (40), wherein during this ascertainment of the actual geometry, the dressing tool (30) does not have to be removed or rechucked.

7. The method according to any one of claims 1 to 6, **characterized in that** the method enables a dressing movement of the dressing tool (30) to be adapted in the machine (100), so that in spite of a dressing tool (30) which is worn to a certain extent, it can still be used for dressing the grinding tool (10).

8. A CNC controlled machine (100) having a CNC controller (50), a tool spindle (101) for fastening a grinding tool (10) so it can be driven to rotate, having an apparatus (32), which comprises a dressing spindle (31) having a dressing tool (30), and having a coordinate measuring system (160), which comprises a scanning sensor (151), **characterized in that** the machine (100) additionally comprises a plunging body (40), which is connected to the machine (40) or to a body movable in the machine, wherein the plunging body (40) is arranged inside the machine (100) so that a transfer region (TB) of the grinding tool (10) can be brought into contact with the plunging body (40), while the grinding tool (10) rotates about a tool axis (R1) of the tool spindle (101), and wherein the dressing tool (30) can be brought into contact with the transfer region (TB) of the grinding tool (10), while the grinding tool (10) rotates about the tool axis (R1) and/or the dressing tool (30) rotates about a dressing axis (R3) of the dressing spindle (31), wherein the machine (100) comprises a software module (SM), which is designed to analyze signals (s1) of the coordinate measuring system (160) and to ascertain at least one item of coordinate information, which permits a statement about the actual geometry of the dressing tool (30).

9. The machine (100) according to claim 8, **characterized in that** the software module (SM) executes at least one computer coordinate transformation to ascertain the item of coordinate information.

10. The machine (100) according to claim 9, **characterized in that** the software module (SM) outputs a message or a signal when the statement about the actual geometry of the dressing tool (30) indicates that the dressing tool (30) is outside a tolerance value and/or does not fulfill another evaluation criterion.

11. The machine (100) according to claim 10, **characterized in that** the message or the signal triggers a change of the dressing tool (30).

## Revendications

1. Procédé de détermination d'écarts de topographie d'un outil de dressage (30) qui est monté dans une machine à commande CNC (100) de façon à pouvoir être entraîné en rotation autour d'un axe de dressage (R3), laquelle machine comprend un outil de rectification (10) pouvant être dressé qui est serré contre un axe de rotation de l'outil (R1), l'outil de dressage (30) ayant une géométrie théorique et l'outil de dressage (30) présentant après un dressage de l'outil de rectification (10) dans la machine (100) une géométrie réelle qui s'écarte de la géométrie théorique, **caractérisé par** les étapes suivantes consistant à :
a) effectuer un mouvement relatif prédéfini de l'outil de dressage (30) par rapport à l'outil de rectification (10), dans lequel, lorsque que l'on effectue le mouvement relatif, au moins une zone de contour de l'outil de dressage (30) est transférée dans une zone de transfert de l'outil de rectification (10),
b) préparer un corps d'immersion (40) à partir d'un matériau pouvant être rectifié dans la machine (100),
c) effectuer un mouvement d'avance relatif (Z3) pour amener la zone de transfert de l'outil de rectification (10) à proximité du corps d'immersion (40),
d) effectuer un mouvement de rotation (ω1) de l'outil de rectification (10) autour de l'axe de rotation de l'outil de rectification (R1),
e) effectuer un mouvement de plongée relatif prédéfini (Z4) pour immerger la zone de transfert de l'outil de rectification (10) dans le matériau du corps d'immersion (40), dans lequel lorsque l'on effectue le mouvement d'immersion (Z4), il se produit un transfert de la topographie de la zone de transfert dans une zone de reproduction du corps d'immersion (40) sous la forme d'une topographie négative,
f) réaliser un mouvement de sondage automatisé de la topographie du corps d'immersion (40) dans la zone de reproduction avec un palpeur à balayage de coordonnées,
g) transmettre les signaux de balayage du palpeur à balayage de coordonnées à un ordinateur,
h) déterminer par calcul au moyen de l'ordinateur au moins une information de coordonnées qui permet d'avoir une information sur la géométrie réelle de l'outil de dressage (30).

2. Procédé selon la revendication 1, **caractérisé en ce qu'**une partie des étapes peuvent être réalisées en même temps ou de façon superposée dans le temps.

3. Procédé selon la revendication 1 ou 2, **caractérisé en ce que**, lorsqu'on réalise le mouvement relatif prédéfini de l'outil de dressage (30) par rapport à l'outil de rectification (10), l'outil de dressage (30) est amené en contact avec l'outil de rectification (10) pendant que l'outil de dressage (30) tourne autour de l'axe de dressage (R3) et que l'outil de rectification (10) tourne autour de l'axe de rotation de l'outil (R1) pour ainsi transférer une partie de la topographie de l'outil de dressage (30) dans la zone de transfert de l'outil de rectification (10).

4. Procédé selon la revendication 1, 2 ou 3, **caractérisé en ce qu'**après le transfert de la topographie, il est réalisé un mouvement de retrait relatif pour retirer la zone de transfert du matériau du corps d'immersion (40).

5. Procédé selon la revendication 1, 2, 3 ou 4, **caractérisé en ce que** le palpeur à balayage de coordonnées fait partie intégrante de la machine (100).

6. Procédé selon la revendication 1, 2, 3 ou 4, **caractérisé en ce que** le procédé permet de procéder dans la machine (100) de façon indirecte et en utilisant le corps d'immersion (40) à la détermination de la géométrie réelle de l'outil de dressage (30) dans lequel, lors de cette détermination de la géométrie réelle, l'outil de dressage (30) ne doit pas être retiré ou enlevé.

7. Procédé selon l'une des revendications 1 à 6, **caractérisé en ce que** le procédé permet dans la machine (100) d'adapter un mouvement de dressage de l'outil de dressage (30) de sorte que, malgré un outil de dressage (30) usé dans une certaine mesure, ce dernier puisse encore être utilisé pour dresser l'outil de rectification (10).

8. Machine à commande CNC (100) comprenant une commande CNC (50), une broche d'outil (101) pour fixer de façon à être entraîné en rotation un outil de rectification (10), comprenant un dispositif (32) qui comprend une broche de dressage (31) avec un outil de dressage (30), et comprenant un système de mesure de coordonnées (160) qui comprend un palpeur à balayage (151), **caractérisée en ce que** la machine (100) comprend en outre un corps d'immersion (40) qui est raccordé à la machine (100) ou à un corps mobile dans la machine, le corps d'immersion (40) étant agencé à l'intérieur de la machine (100) de façon à ce qu'une zone de transfert (TB) de l'outil de rectification (10) puisse être amené en contact avec le corps d'immersion (40) pendant que l'outil de rectification (10) tourne autour d'un axe d'outil (R1) de la broche d'outil (101) et que l'outil de dressage (30) puisse être amené en contact avec la zone de transfert (TB) de l'outil de rectification (10) pendant que l'outil de rectification (10) tourne autour de l'axe d'outil (R1) et/ou que l'outil de dressage (30) tourne autour d'un axe de dressage (R3) de la broche de dressage (31), la machine (100) comprenant un module de logiciel (SM) qui est conçu pour analyser les signaux (si) du système de mesure de coordonnées (160) et pour déterminer au moins une information de coordonnées qui permet d'avoir une information sur la géométrie réelle de l'outil de dressage (30).

9. Machine (100) selon la revendication 8, **caractérisée en ce que** le module de logiciel (SM) exécute au moins une transformation de coordonnées mathématique pour déterminer l'information de coordonnées.

10. Machine (100) selon la revendication 9, **caractérisée en ce que** le module de logiciel (SM) émet un message ou un signal lorsque que l'information sur la géométrie réelle de l'outil de dressage (30) indique que l'outil de dressage (30) est en-dehors d'une valeur de tolérance et/ou qu'il ne remplit pas un autre critère d'évaluation.

11. Machine (100) selon la revendication 10, **caractérisée en ce que** le message ou le signal déclenche un changement de l'outil de dressage (30).
